# EUROPEAN PATENT SPECIFICATION

(11) **EP 0 497 625 B1**
(45) Date of publication and mention of the grant of the patent: **26.07.1995**
(21) Application number: 92300865.0
(22) Date of filing: 31.01.1992
(51) Int. Cl.: F16F 9/18

(54) **Shock absorber**
Stossdämpfer
Amortisseur de chocs

(30) Priority: 31.01.1991 JP 9205/91
(43) Date of publication of application: 05.08.1992
(73) Proprietor: Kayaba Kogyo Kabushiki Kaisha, Tokyo (JP)
(72) Inventor: Furuta, Takashi, Seki-Shi, Gifu-ken (JP)
(74) Representative: Powell, Timothy John

(56) References cited:
- DE-A- 2 553 246
- DE-A- 3 337 798
- FR-A- 2 282 576
- FR-A- 2 420 061
- GB-A- 1 232 236
- GB-A- 1 599 168
- US-A- 4 423 801
- US-A- 4 442 925
- US-A- 4 460 073

## Description

This invention relates to an outer shell structure of a strut type shock absorber disposed between the body of a vehicle such as a four-wheeled vehicle and an axle thereof to damp vibrations from the surface of a road.

It is known to provide suspended between the body of a four-wheeled vehicle and an axle thereof a shock absorber for reducing the transfer of vibration to the vehicle body to ensure stable running of the vehicle independently of running conditions, changes in the state of a road surface, etc. Shock absorbers of this type there are known, for example, those disclosed in Japanese Utility Model Publication No. 32035/1983, Japanese Utility Model Laid Open No. 16194/1980, U.S. Patent Application Serial No. 401501 (specification and drawings) and European Patent Application No. 81107940 (specification and drawings).

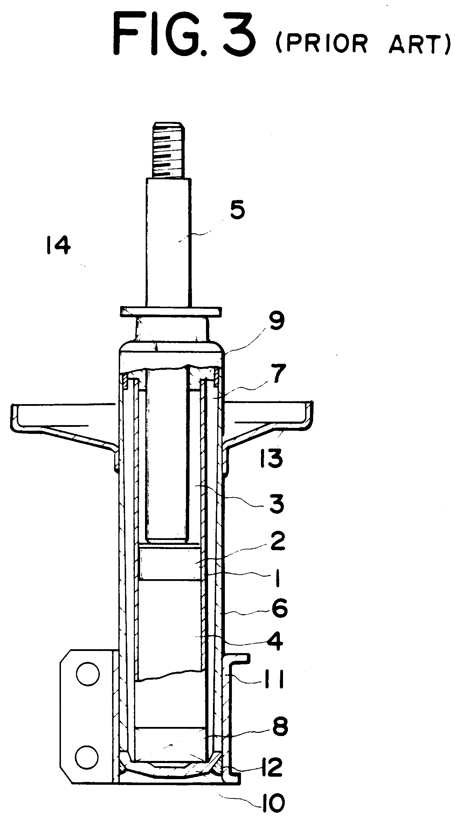

The conventional shock absorbers disclosed in Japanese Utility Model Publication No. 32035/1983, for example, has the structure shown in Fig. 3 attached hereto.

In Fig. 3, the reference numeral 1 denotes a cylinder; the numeral 2 denotes a piston provided with a damping force generating mechanism which piston partitions the interior of the cylinder 1 into a rod-side chamber 3 and a piston-side chamber 4; numeral 5 denotes a piston rod; numeral 6 denotes an outer shell which encloses the outside of the cylinder 1 to define a reservoir chamber 7; numeral 8 denotes a base valve for imparting a damping force to a hydraulic oil flowing between the reservoir chamber 7 and the piston-side chamber 4; and numeral 9 denotes a bearing portion which closes the upper ends of the rod-side chamber 3 and the reservoir chamber 7 and locates the piston rod 5 for hermetically sealed entrance and exit of the piston rod with respect to the interior of the cylinder 1. Further, numeral 10 denotes a lower cap provided at an end of the cylinder 1 so as to enclose the base valve 8, and numeral 11 denotes a knuckle bracket which supports the outer periphery of the lower end of the outer shell 6 and which is mounted on the axle side, the knuckle bracket 11 and the lower cap 10 being integrally connected with each other through a lower weld portion 12. Numeral 13 denotes a spring guide and numeral 14 denotes a seam weld portion. In order to obtain an optimum strength, i.e., strength against a bending moment load, of the portion of the outer shell 6 opposed to the knuckle bracket 11, despite a light weight thereof, the outer shell 6 is smaller in its thickness on the side of the seam weld portion 14 and is sufficiently large in its thickness on the lower weld portion 12 side, according to a bending moment load distribution. As a whole, the outer shell is formed as a tapered pipe to attain the reduction in weight thereof.

In such conventional shock absorber, at the time of extension of the piston rod 5, the hydraulic oil in the rod-side chamber 3 flows to the piston-side chamber 4 through the damping force generating mechanism in the piston 2, and an extension-side damping force is generated at this time. On the other hand, during the compression stroke, the hydraulic oil in the piston-side chamber 4 flows to the rod-side chamber 3 through the damping force generating mechanism, and at this time in the compression stroke hydraulic oil is allowed to flow between the piston-side chamber 4 and the reservoir chamber 7 through the base valve 8 to generate a compression-side damping force.

Since the conventional shock absorber is constructed as above, it is necessary to fabricate the outer shell 6 as a tapered pipe like the above or, if necessary, as a stepped pipe by drawing, thus requiring the use of special die and plug, resulting in that not only large-scaled equipment and power and plant investment are required but also the processing time and cost are increased.

In US-A-4423801 there is disclosed a shock absorber including a piston provided with a damping force generating mechanism, said piston partitioning the interior of a cylinder into a rod-side chamber and a piston side chamber; a piston rod having said piston secured thereto, said piston rod being moveable into and out of said cylinder; a base valve provided in an open end of said piston side chamber of the cylinder; and an outer shell structure comprising an outer shell enclosing the outside of said cylinder to form a reservoir chamber, whereby the shock absorber includes a bottomed cylinder fitted in the lower end portion of the outer shell along the inner periphery thereof, said bottomed cylinder having a cylindrical portion which co-operates with the outer shell and which has a predetermined axial length, said bottomed cylinder being welded to said outer shell, said outer shell being thin walled and of a generally constant wall thickness.

According to the invention, there is provided a shock absorber including a piston provided with a damping force generating mechanism, said piston partitioning the interior of a cylinder into a rod-side chamber and a piston-side chamber;
a piston rod having said piston secured thereto, said piston rod being moveable into and out of said cylinder;
a base valve provided in an open end of said piston-side chamber of the cylinder; and
an outer shell structure comprising an outer shell enclosing the outside of said cylinder to form a reservoir chamber;
the shock absorber including a bottomed cylinder fitted in the lower end portion of the outer shell along the inner periphery thereof, said bottomed cylinder having a cylindrical portion which co-operates with the shell and which has a predetermined axial length, said outer shell being thin walled and of a constant wall thickness, characterised in that the outer shell structure includes a knuckle bracket for supporting the outer periphery of an end portion of said outer shell remote from the piston;
and in that the bottomed cylinder is welded to the outer shell and the knuckle bracket.

By "small wall thickness" and "thin walled" as used herein is meant a wall thickness which is less than that of the bottomed cylinder, or of the wall thickness of a corresponding component in the prior art device.

Thus there is provided a strut type shock absorber advantageously having an outer shell formed using a standard, inexpensive, thin-walled pipe of a certain thickness.

A further advantage is that the shock absorber can be arranged so that the bottomed cylinder, specifically the cylindrical portion thereof, bears a maximum bending moment load.

Additionally, there is provided a strut type shock absorber which, despite being light in weight, can afford an optimum strength according to a bending moment load distribution.

Furthermore, there is provided a strut type shock absorber which is easy to manufacture and which is capable of decreasing the manufacturing time and cost.

The bottomed cylinder used in the above construction of the present invention also serves as the conventional lower cap which seals a hydraulic oil within the cylinder, and it is fitted in the outer shell along the inner periphery of a lower end portion of the outer shell which is thin-walled and then welded to the outer shell together with the knuckle bracket. Therefore, the end portion of the outer shell where a maximum bending moment load is generated can be reinforced in a simple construction easily and inexpensively.

There now follows a description of a preferred embodiment of the invention, by way of example, with reference being made to the accompanying drawings in which:
Fig. 1 is a front view, partially in longitudinal section, of a shock absorber according to an embodiment of the present invention;
Fig. 2 is a perspective view of a bottomed cylinder which may be employed instead of the bottomed cylinder shown in Figure 1; and
Fig. 3 is a front view, partially in longitudinal section, of a conventional (prior art) shock absorber.

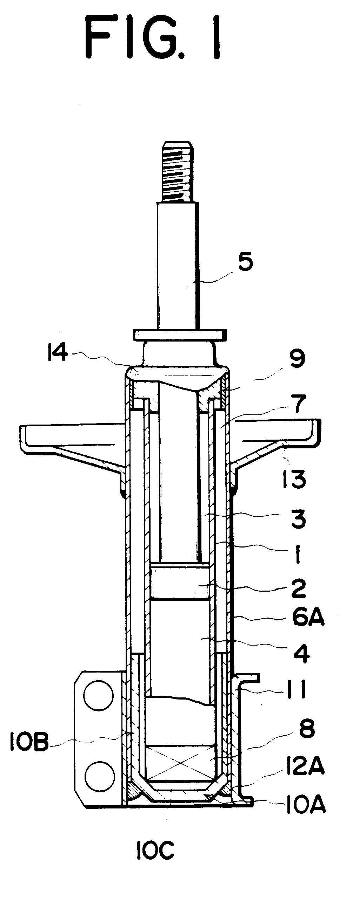

In Fig. 1, the reference numeral 6A denotes an outer shell formed using an ordinary thin-walled pipe and having a wall thickness which is constant throughout the overall length thereof, and the numeral 10A denotes a bottomed cylinder fitted in the outer shell 6A along the inner periphery of an end portion of the outer shell. The bottomed cylinder extends over a predetermined axial length of the outer shell and is welded integrally with the outer shell 6A and a knuckle bracket 11. The bottomed cylinder 10A comprises a cylindrical portion 10B which bears a maximum bending moment load in cooperation with the lower end portion of the outer shell 6A, and a bottom 10C used as a lower cap which seals the lower end of a cylinder 1. Numeral 12A denotes a weld portion. The cylindrical portion 10B of the bottomed cylinder 10A is also constant in its wall thickness. Other constructional portions which are the same as in Fig. 3 are indicated by the same reference numerals as in Fig. 3 and repeated explanations thereof will be omitted.

The shock absorber of this embodiment, like the one described above in connection with the prior art, generates a damping force during the extension stroke and compression stroke of a piston rod 5. In the shock absorber of this embodiment, the outer shell 6A is thin-walled throughout the overall length thereof to an extent capable of withstanding a predetermined bending moment load. At the portion of the outer shell 6A where the knuckle bracket 11 is mounted, there is generated a maximum bending moment load, so the bottomed cylinder 10A is fitted in an end portion of the outer shell 6A on the inner periphery side of the same shell, for example by press-fitting and is then connected integrally with the outer shell 6A and the knuckle bracket 11 by welding, whereby the strength of the outer shell can be made sufficient, or optimal, despite the light weight thereof. Thus, since the outer shell 6A is constituted by a commercially available thin-walled cylinder, it is light-weight, inexpensive and obtainable easily, so the shock absorber can be manufactured using an existing inexpensive welding apparatus without using any expensive equipment. Besides, since the assembly can be done merely by fitting and welding, the mounting efficiency can be improved and the quality can be made reliable.

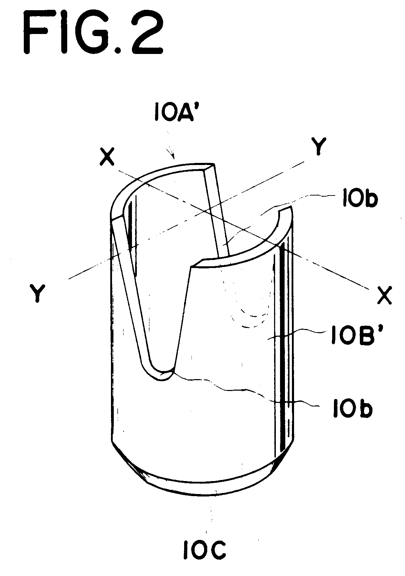

Referring now to Fig. 2, there is illustrated another example of a bottomed cylinder. The cylindrical wall portion of this bottomed cylinder has cutouts, unlike the bottomed cylinder shown in Fig. 1.

In the case of a strut type shock absorber, the direction of a bending moment load is fixed. More particularly, a bending moment load acts in the direction X-X passing through the axis including a knuckle mounting bracket of the knuckle bracket 11. In the bottomed cylinder shown in Fig. 2, which is indicated at 10A′, a cylindrical portion 10B′ in the X-X direction is allowed to remain, while a cylindrical portion in the direction Y-Y passing through the axis is cut out to form cutout portions 10b, 10b. Thus, a further reduction in weight corresponding to the cutout portions can be attained without affecting the required strength.

According to the present invention there are obtained the following effects.

Since a commercially available, standard, thin-walled pipe having a constant wall thickness throughout the overall length thereof including the upper portion (where the bending moment load small) is used as the outer shell, it is possible to attain the reduction of cost and weight, and it is not necessary to manufacture the outer shell specially. Besides, unlike the prior art shock absorbers since it is not necessary to use a special die or plug for the formation of a tapered or stepped wall, it is possible to effect a saving of equipment and power, a reduction of manufacturing costs and an increase in the manufacturing speed.

Since there is adopted a double pipe structure wherein a bottomed cylinder having a cylindrical portion extending over a predetermined axial length is fitted in the outer shell along the inner periphery of a lower end portion of the shell where a maximum bending moment load is generated, a strength sufficient to bear the maximum bending moment load is obtained by an extremely simple method in cooperation with the cylindrical portion of the bottomed cylinder even if the outer shell is thin-walled.

The bottomed cylinder not only reinforces the outer shell and the knuckle bracket but also serves as a lower cap of the cylinder, and thus two functions can be attained by a single member.

## Claims

1. A shock absorber including:
a piston (2) provided with a damping force generating mechanism, said piston partitioning the interior of a cylinder (1) into a rod-side chamber (3) and a piston-side chamber (4);
a piston rod (5) having said piston (2) secured thereto, said piston rod (5) being moveable into and out of said cylinder (1);
a base valve (8) provided in an open end of said piston-side chamber of the cylinder; and
an outer shell structure comprising an outer shell (6A) enclosing the outside of said cylinder (1) to form a reservoir chamber (7);
the shock absorber including a bottomed cylinder (10A) fitted in the lower end portion of the outer shell (6A) along the inner periphery thereof, said bottomed cylinder (10A) having a cylindrical portion (10B) which cooperates with the shell (6A) and which has a predetermined axial length, said outer shell (6A) being thin walled and of a constant wall thickness, characterised in that the outer shell structure includes a knuckle bracket (11) for supporting the outer periphery of an end portion of said outer shell (6A) remote from the piston (2); and in that the bottomed cylinder (10A) is welded to the outer shell and the knuckle bracket.

2. A shock absorber according to Claim 1, characterised in that the lower end portion of said outer shell (6A) where a maximum bending moment load is generated has a double pipe structure comprising a thin-walled pipe of a constant wall thickness and a cylindrical portion (10B) fitted in said pipe and having a predetermined axial length.

3. A shock absorber according to Claim 1, characterised in that the cylindrical portion (10B) of said bottomed cylinder is fitted in the lower end portion of said outer shell (6A) along the inner periphery thereof, and the bottom (10C) of the bottomed cylinder (10A) acts as a lower cap at a lower end of the cylinder.

4. A shock absorber according to Claim 1, characterised in that the inner periphery of a lower end portion of said knuckle bracket (11), the lower end of said outer shell (6A) and the outer periphery of the bottom (10C) of said bottomed cylinder (10A) are bonded together by welding.

5. A shock absorber according to any of Claims 1 to 4, characterised in that the bottomed cylinder (10A) has one or more recesses or cut outs (10B) formed in the wall thereof, the recesses or cut outs (10B) corresponding to regions of the bottomed cylinder (10A) which experience small bending stresses relative to the remainder of the bottomed cylinder (10A)

## Patentansprüche

1. Stoßdämpfer mit
einem Kolben (2), der mit einem Dämpfungskraft erzeugenden Mechanismus versehen ist, wobei dieser Kolben das Innere eines Zylinders (1) in eine Stangenseitenkammer (3) und eine Kolbenseitenkammer (4) teilt,
einer Kolbenstange (5), an der der Kolben (2) befestigt ist, wobei die Kolbenstange (5) in den Zylinder (1) und aus ihm bewegbar ist,
einem Basisventil (8), das in einem offenen Ende der Kolbenseitenkammer des Zylinders vorgesehen ist, und
einer Außengehäusestruktur, die ein Außengehäuse (6A) umfaßt, welches die Außenseite des Zylinders (1) unter Bildung einer Speicherkammer (7) einschließt, wobei der Stoßdämpfer einen mit Boden versehenen Zylinder (10A) einschließt, der in dem unteren Endabschnitt des Außengehäuses (6A) entlang dem inneren Umfang desselben eingepaßt ist, der mit Boden versehene Zylinder (10A) einen zylindrischen Abschnitt (10B) hat, welcher mit dem Gehäuse (6A) zusammenarbeitet und welcher eine vorbestimmte Axiallänge hat, und das Außengehäuse (6A) dünnwandig ist und eine konstante Wanddicke besitzt,
**dadurch gekennzeichnet**, daß die Außengehäusestruktur eine Verbindungsstütze (11) zur Unterstützung des Außenumfanges eines Endabschnittes des Außengehäuses (6A) entfernt von dem Kolben (2) einschließt und daß der mit Boden versehene Zylinder (10A) mit dem Außengehäuse und der Verbindungsstütze verschweißt ist.

2. Stoßdämpfer nach Anspruch 1, **dadurch gekennzeichnet**, daß der untere Endabschnitt des Außgenhäuses (6A), wo eine maximale Biegemomentbelastung erzeugt wird, eine Doppelrohrstruktur hat, die ein dünnwandiges Rohr mit konstanter Wanddicke und einen zylindrischen Abschnitt (10B), welcher in dieses Rohr eingepaßt ist und eine vorbestimmte Axiallänge besitzt, umfaßt.

3. Stoßdämpfer nach Anspruch 1, **dadurch gekennzeichnet**, daß der zylindrische Abschnitt (10B) des mit Boden versehenen Zylinders in den unteren Endabschnitt des Außengehäuses (6A) entlang dem Innenumfang desselben eingepaßt ist und der Boden (10C) des mit Boden versehenen Zylinders (10A) als eine untere Kappe an einem unteren Ende des Zylinders wirkt.

4. Stoßdämpfer nach Anspruch 1, **dadurch gekennzeichnet**, daß der Innenumfang eines unteren Endabschnittes der Verbindungsstütze (11), das untere Ende des Außengehäuses (6A) und der Außenumfang des Bodens (10C) des mit Boden versehenen Zylinders (10A) durch Schweißen miteinander verbunden sind.

5. Stoßdämpfer nach einem der Ansprüche 1 bis 4, **dadurch gekennzeichnet**, daß der mit Boden versehene Zylinder (10A) eine oder mehrere Vertiefungen oder Ausschnitte (10B) hat, die in seiner Wand ausgebildet sind, wobei die Vertiefungen oder Ausschnitte (10B) den Bereichen des mit Boden versehenen Zylinders (10A) entsprechen, die kleinen Biegespannungen in bezug auf den Rest des mit Boden versehenen Zylinders (10A) ausgesetzt sind.

## Revendications

1. Amortisseur comprenant :
un piston (2) doté d'un mécanisme de production de force d'amortissement, ledit piston divisant l'intérieur d'un cylindre (1) en une chambre de côté tige (3) et une chambre de côté piston (4);
une tige de piston (5) à laquelle ledit piston (2) est fixé, ladite tige de piston (5) pouvant entrer dans ledit cylindre (1) et sortir de celui-ci;
une soupape de base (8) disposée dans une extrémité ouverte de ladite chambre de côté piston du cylindre; et
une structure de boîtier externe comprenant un boîtier externe (6A) enfermant l'extérieur dudit cylindre (1) pour former une chambre de réservoir (7);
l'amortisseur comprenant un cylindre à fond (10A) emboîté dans la portion d'extrémité inférieure du boîtier externe (6A) le long de la périphérie interne de celui-ci, ledit cylindre à fond (10A) comportant une portion cylindrique (10B) qui coopère avec le boîtier (6A) et qui a une longueur axiale prédéterminée, ledit boîtier externe (6A) ayant des parois minces et une épaisseur de parois constante, caractérisé en ce que la structure de boîtier externe comprend une console à genouillère (11) pour supporter la périphérie externe d'une portion d'extrémité dudit boîtier externe (6A) loin du piston (2); et en ce que le cylindre à fond (10A) est soudé au boîtier externe et à la console à genouillère.

2. Amortisseur selon la revendication 1, caractérisé en ce que la portion d'extrémité inférieure dudit boîtier externe (6A) où un couple de flexion maximal est produit comporte une structure à double conduit comprenant un conduit à parois minces d'une épaisseur de parois constante et une portion cylindrique (10B) emboîtée dans ledit conduit et ayant une longueur axiale prédéterminée.

3. Amortisseur selon la revendication 1, caractérisé en ce que la portion cylindrique (10B) dudit cylindre à fond est emboîtée dans la portion d'extrémité inférieure dudit boîtier externe (6A) le long de la périphérie interne de celui-ci, et le fond (10C) du cylindre à fond (10A) sert de bouchon inférieur à une extrémité inférieure du cylindre.

4. Amortisseur selon la revendication 1, caractérisé en ce que la périphérie interne d'une portion d'extrémité inférieure de ladite console à genouillère (11), l'extrémité inférieure dudit boîtier externe (6A) et la périphérie externe du fond (10C) dudit cylindre à fond (10A) sont liées par soudage.

5. Amortisseur selon l'une quelconque des revendications 1 à 4, caractérisé en ce que le cylindre à fond (10A) comporte une ou plusieurs encoches ou découpes (10B) formées dans sa paroi, les encoches ou découpes (10B) correspondant à des régions du cylindre à fond (10A) qui subissent de faibles contraintes de flexion par rapport au restant du cylindre à fond (10A).
